(19) Europäisches Patentamt
European Patent Office
Office européen des brevets

(11) **EP 3 825 842 B1**

(12) **EUROPEAN PATENT SPECIFICATION**

(45) Date of publication and mention
of the grant of the patent:
**06.09.2023   Bulletin 2023/36**

(21) Application number: **20217328.2**

(22) Date of filing: **01.04.2020**

(51) International Patent Classification (IPC):
***G06F 9/30*** *(2018.01)*

(52) Cooperative Patent Classification (CPC):
**G06F 9/30043; G06F 9/30036; G06F 9/30076;
G06F 9/3016; G06F 9/30192**

(54) **DATA PROCESSING METHOD AND APPARATUS, AND RELATED PRODUCT**

DATENVERARBEITUNGSVERFAHREN UND -VORRICHTUNG UND ZUGEHÖRIGES PRODUKT

PROCÉDÉ ET APPAREIL DE TRAITEMENT DE DONNÉES ET PRODUIT ASSOCIÉ

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **04.04.2019   CN 201910272411
04.04.2019   CN 201910272625
04.04.2019   CN 201910272660
19.04.2019   CN 201910320091
19.04.2019   CN 201910319165
25.04.2019   CN 201910340177
25.04.2019   CN 201910341003**

(43) Date of publication of application:
**26.05.2021   Bulletin 2021/21**

(62) Document number(s) of the earlier application(s) in
accordance with Art. 76 EPC:
**20783678.4 / 3 800 547**

(73) Proprietor: **Cambricon Technologies Corporation
Limited
Beijing 100191 (CN)**

(72) Inventors:
• **LIU, Shaoli
Beijing, 100190 (CN)**
• **WANG, Bingrui
Beijing, 100190 (CN)**
• **LIANG, Jun
Beijing, 100191 (CN)**

(74) Representative: **Huang, Liwei
Cäcilienstraße 12
40597 Düsseldorf (DE)**

(56) References cited:
**WO-A1-2018/217360       US-A1- 2016 246 599
US-A1- 2018 314 946       US-B1- 6 292 879**

**Description**

**Technical Field**

The disclosure relates generally to the field of computer technologies, and more specifically to a data processing method and an apparatus and related products.

**Background**

With the continuous development of the AI (Artificial Intelligence) technology, it has gradually obtained wide application and worked well in the fields of image recognition, speech recognition, and natural language processing, and the like. However, as the complexity of AI algorithms is growing, the amount of data and data dimensions that need to be processed are increasing. In related arts, processors usually determine the data address by obtaining parameters of instructions, and then read and use the data according to the data address, which requires those skilled in the art to set relevant parameters for data access (such as the relationship between data and data, or data dimension and data dimension, *etc.*) when designing parameters, so as to generate instructions and transmit the instructions to the processors to complete the data access. The above-mentioned method reduces the processing efficiency of the processors. US 20180314946 discloses a processing core which includes metadata stored with the first data tile in the memory. The control unit executes the instruction according to the metadata.

US 2016246599 relates to a hardware instruction generation unit for a specialized processor.

**Summary**

In order to solve the technical problems, the present disclosure provides a data processing technical solution.

A first aspect of the present disclosure provides a data processing method including: when an operand of a decoded first processing instruction includes an identifier of a descriptor, obtaining content of the descriptor according to the identifier of the descriptor, where the descriptor is configured to indicate a shape of a tensor; and executing the first processing instruction according to the content of the descriptor.

A second aspect of the present disclosure provides a data processing apparatus including: a content obtaining module configured to, when an operand of a decoded first processing instruction includes the identifier of the descriptor, obtain content of a descriptor according to an identifier of the descriptor, where the descriptor is configured to indicate a shape of a tensor; and an instruction executing module configured to execute the first processing instruction according to the content of the descriptor.

A third aspect of the present disclosure provides a neural network chip including the data processing apparatus.

A fourth aspect of the present disclosure provides an electronic device including the neural network chip.

A fifth aspect of the present disclosure provides a board card including: a storage device, an interface apparatus, a control device, and the above-mentioned neural network chip. The neural network chip is connected to the storage device, the control device, and the interface apparatus respectively; the storage device is configured to store data; the interface apparatus is configured to implement data transmission between the neural network chip and an external apparatus; and the control device is configured to monitor a state of the neural network chip.

According to embodiments of the present disclosure, by introducing a descriptor indicating the shape of a tensor, the corresponding content of the descriptor can be determined when the identifier of the descriptor is included in the operand of a decoded processing instruction, and the processing instruction can be executed according to the content of the descriptor, which can reduce the complexity of data access and improve the efficiency of data access.

In order to make other features and aspects of the present disclosure clearer, a detailed description of exemplary embodiments with reference to the drawings is provided below.

**Brief Description of the Drawings**

The accompanying drawings contained in and forming part of the specification together with the specification show exemplary embodiments, features and aspects of the present disclosure and are used to explain the principles of the disclosure.

Fig. 1 shows a block diagram of a data processing apparatus according to an embodiment of the present disclosure.
Fig. 2 shows a schematic diagram of a data storage space of a data processing apparatus according to an embodiment of the present disclosure.
Fig. 3 shows a flowchart of a data processing method according to an embodiment of the present disclosure.
Fig. 4 shows a block diagram of a board card according to an embodiment of the present disclosure.

## Detailed Description of the Embodiments

Various exemplary embodiments, features, and aspects of the present disclosure will be described in detail below with reference to the drawings. The same marks in the drawings represent the same or similar elements. Although various aspects of the embodiments are shown in the drawings, the drawings are not necessarily drawn to scale unless specifically noted.

The "exemplary" as used herein means "serving as an example, embodiment, or illustration." Any embodiment described herein as "exemplary" is not necessarily to be interpreted as superior to or better than other embodiments.

In addition, in order to better illustrate the present disclosure, a lot of specific details are given in the detailed description below. Those skilled in the art should understand that the present disclosure can be implemented without certain specific details. In some embodiments, methods, means, components, and circuits that are well known to those skilled in the art have not been described in detail in order to highlight the main idea of the present disclosure.

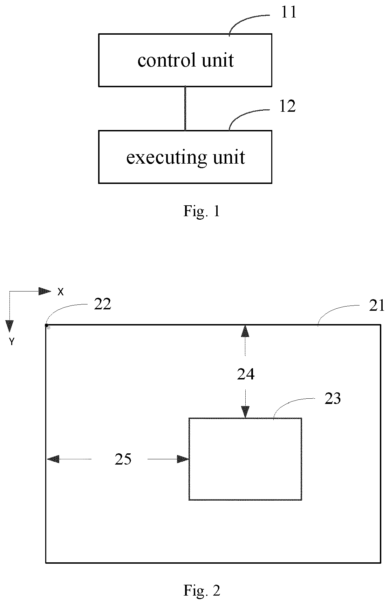

An embodiment of the present disclosure provides a data processing apparatus. Fig. 1 shows a block diagram of a data processing apparatus according to an embodiment of the present disclosure. As shown in Fig. 1, the data processing apparatus includes a control unit 11 and an execution unit 12. The control unit 11 is configured to:

> obtain content of a descriptor from a descriptor storage space according to an identifier of the descriptor when an operand of a decoded first processing instruction includes the identifier of the descriptor, where the descriptor is configured to indicate a shape of a tensor; and
> send the content of the descriptor and the first processing instruction to the execution unit, so that the execution unit executes the first processing instruction according to the content of the descriptor.

According to the embodiment of the present disclosure, the control unit obtains the content of the descriptor through the identifier of the descriptor in the operand of the first processing instruction, and sends the content of the descriptor to the execution unit to execute the first processing instruction, so that the operand can be obtained through the descriptor when the processing instruction is executed, which can reduce the complexity of data access, and improve the data access efficiency of the processor.

In a possible implementation method, the data processing apparatus can be applied to a processor. The processor may include a general-purpose processor (for example, a central processing unit (CPU), a graphics processing unit (GPU)) and a dedicated processor (for example, an artificial intelligence processor, a scientific computing processor, or a digital signal processor). The present disclosure does not limit the type of processor.

In a possible implementation method, the control unit 11 may be configured to decode the received first processing instruction to obtain a decoded first processing instruction, where the decoded first processing instruction includes an operation code and one or more operands, and the operation code is used to indicate the processing type corresponding to the first processing instruction. The first processing instruction may include a data access instruction, an operation instruction, a descriptor management instruction, a synchronization instruction, *etc.* The present disclosure does not limit the specific type of the first processing instruction.

In a possible implementation method, after the control unit 11 decodes the received first processing instruction, when the operand of the instruction includes the identifier of the descriptor, the control unit 11 obtains the content of the descriptor from the descriptor storage space according to the identifier of the descriptor; and then the control unit 11 sends the content and the first processing instruction to the execution unit 12. After receiving the content of the descriptor and the first processing instruction, the execution unit 12 first determines the data address of the data corresponding to the operand of the first processing instruction in the data storage space according to the content of the descriptor, and then the execution unit 12 executes the data processing corresponding to the first processing instruction according to the data address. The data address of the data storage space may be an actual physical address or a virtual address, and the present disclosure does not limit the types of the data addresses.

In a possible implementation method, the descriptor storage space may be a storage space in an internal memory of the control unit 11, and the data storage space may be a storage space in an internal memory of the control unit 11 or may be a storage space in an external memory connected to the control unit 11, which is not limited in the present disclosure.

In a possible implementation method, the descriptor is used to indicate the shape of N-dimensional tensor data, where N is a positive integer, for example, N=1, 2, or 3. A tensor may have a variety of forms of data composition, and a tensor can have different dimensions, for example, a scalar can be viewed as a 0-dimensional tensor, a vector can be viewed as a 1-dimensional tensor, and a matrix can be viewed as a tensor in 2 dimensions or more dimensions. The shape of a tensor includes information such as the dimensions of the tensor and the size of the tensor in each dimension. For example, for a tensor:

$$\begin{bmatrix} 1 & 2 & 3 & 4 \\ 11 & 22 & 33 & 44 \end{bmatrix},$$

The shape of the tensor can be described by the descriptor as (2, 4), in other words, the tensor is a two-dimensional tensor indicated by the two parameters, and the size of the tensor in a first dimension (column) is 2, and the size of the tensor in a second dimension (row) is 4. It should be noted that the present disclosure does not limit the manner in which the descriptor indicates the shape of the tensor.

In a possible implementation method, the value of N can be determined according to the dimensions (orders) of the tensor data, or may be set according to the usage of the tensor data. For example, when the value of N is 3, the tensor data is three-dimensional tensor data, and the descriptor can be used to indicate the shape (such as offset, size, *etc.*) of the three-dimensional tensor data in three dimensions. It should be understood that those skilled in the art can set the value of N according to actual needs, which is not limited in the present disclosure.

In a possible implementation method, the descriptor may be composed of the identifier of the descriptor and the content of the descriptor. The identifier of the descriptor is used to identify the descriptor, for example, the identifier of the descriptor is the serial number of the descriptor. The content of the descriptor includes at least one shape parameter indicating the shape of the tensor data, for example, tensor data is 3-dimensional data, the shape parameters of two dimensions among the three dimensions of the tensor data are fixed, and the content of the descriptor may include a shape parameter indicating the tensor data in the remaining dimension.

In a possible implementation method, the identifier and content of the descriptor can be stored in the descriptor storage space (an internal memory), such as a register, an on-chip SRAM or other media caches, *etc.* The tensor data indicated by the descriptor can be stored in the data storage space (an internal memory or an external memory), such as an on-chip cache or an off-chip memory. The present disclosure does not limit the specific position of the descriptor storage space and the position of the data storage space.

In a possible implementation method, the identifier and content of the descriptor and the tensor data indicated by the descriptor can be located in a same area in the internal memory, for example, a continuous area of an on-chip cache can be used to store the related content of the descriptor, where an address of the area is ADDR0-ADDR1023. An address ADDRO-ADDR63 can be used as a descriptor storage space to store the identifier and content of the descriptor, and an address ADDR64-ADDR1023 can be used as a data storage space to store the tensor data indicated by the descriptor. In the descriptor storage space, an address ADDR0-ADDR31 can be used to store the identifier of the descriptor, and an address ADDR32-ADDR63 can be used to store the content of the descriptor. It should be noted that the address ADDR is not limited to 1 bit or 1 byte, and the ADDR is an address unit used to represent an address. Those skilled in the art can determine the descriptor storage space, the data storage space, and the specific addresses thereof according to actual situations, which is not limited in the present disclosure.

In a possible implementation method, the identifier and content of the descriptor, and the tensor data indicated by the descriptor can be stored in different areas of the internal memory. For example, a register may be used as a descriptor storage space to store the identifier and content of the descriptor, and an on-chip cache may be used as a data storage space to store the tensor data indicated by the descriptor.

In a possible implementation method, when a register is used to store the identifier and content of the descriptor, the serial number of the register can be taken as the identifier of the descriptor. For example, when the serial number of the register is 0, the identifier of the descriptor stored in the register is set to 0. When the descriptor in the register is valid, an area can be allocated in the caching space for storing the tensor data according to the size of the tensor data indicated by the descriptor.

In a possible implementation method, the identifier and content of the descriptor can be stored in the internal memory, and the tensor data indicated by the descriptor can be stored in the external memory. For example, on-chip storage of the identifier and content of the descriptor and off-chip storage of the tensor data indicated by the descriptor may be adopted.

In a possible implementation method, the data address of the data storage space corresponding to the identifier of the descriptor may be a fixed address. For example, a separate data storage space may be provided for the tensor data, and a start address of each tensor data in the data storage space corresponds to the identifier of the descriptor. In this case, the execution unit can determine the data address of the data corresponding to the operand in the data storage space according to the content of the descriptor, and then execute the first processing instruction.

In a possible implementation method, when the data address of the data storage space corresponding to the identifier of the descriptor is a variable address, the descriptor may be also used to indicate the address of N-dimensional tensor data, where the content of the descriptor may further include at least one address parameter representing the address of the tensor data. For example, if the tensor data is a 3-dimenisonal data, when the descriptor points to the address of the tensor data, the content of the descriptor may include an address parameter indicating the address of the tensor data, such as a start physical address of the tensor data; or the content of the descriptor may include a plurality of address parameters of the address of the tensor data, such as a start address + an address offset of the tensor data, or address parameters of the tensor data in each dimension. Those skilled in the art can set the address parameters according to actual needs, which is not limited in the present disclosure.

In a possible implementation method, the address parameter of the tensor data includes a base address of the datum point of the descriptor in the data storage space of the tensor data, where the base address may be different according to the change of the datum point. The present disclosure does not limit the selection of the datum point.

In a possible implementation method, the base address may include the start address of the data storage space. When the datum point of the descriptor is a first data block of the data storage space, the base address of the descriptor is the start address of the data storage space. When the datum point of the descriptor is other data than the first data block in the data storage space, the base address of the descriptor is the address of the data block in the data storage space.

In a possible implementation method, the shape parameter of the tensor data includes at least one of the followings: a size of the data storage space in at least one of N dimensions, a size of the storage area in at least one of N dimensions, an offset of the storage area in at least one of N dimensions, a position of at least two vertices at diagonal positions in N dimensions relative to the datum point, and a mapping relationship between a data description position of the tensor data indicated by the descriptor and the data address of the tensor data indicated by the descriptor. The data description position is a mapping position of a point or an area in the tensor data indicated by the descriptor, for example, if the tensor data is a 3-dimensional data, the descriptor can use a coordinate (x, y, z) to represent the shape of the tensor data, and the data description position of the tensor data can be represented by a coordinate (x, y, z), and the data description position of the tensor data may be a position of a point or an area where the tensor data is mapped in a 3-dimensional space. It should be understood that those skilled in the art may select a shape parameter representing tensor data according to actual conditions, which is not limited in the present disclosure.

By using the descriptor in the process of data access, the association between data can be established, thereby reducing the complexity of data access and improving the processing efficiency of instructions.

In a possible implementation method, the content of the descriptor of the tensor data can be determined according to the base address of the datum point of the descriptor in the data storage space of the tensor data, the size of the data storage space in at least one direction of the N dimensions, and the size of the storage area in at least one direction of the N dimensions and/or the offset of the storage area in at least one direction of the N dimensions.

Fig. 2 shows a schematic diagram of a data storage space of a data processing apparatus according to an embodiment of the present disclosure. As shown in Fig. 2, a data storage space 21 stores a 2-dimensional data in a row-first manner, where the data storage space 21 can be represented by (x, y) (where the x axis extends horizontally to the right, and the y axis extends vertically down), a size in the X axis direction (a size of each row) is ori_x (which is not shown in the figure), a size in the Y axis direction (total count of rows) is ori_y (which is not shown in the figure), and a start address PA_start (a base address) of the data storage space 21 is a physical address of a first data block 22. A data block 23 is part of the data in the data storage space 21, where an offset 25 of the data block 23 in the X axis direction is represented as offset_x, an offset 24 of the data block 23 in the Y axis direction is represented as offset_y, the size in the X axis direction is represented as size_x, and the size in the Y axis direction is represented as size_y.

In a possible implementation method, when the descriptor is used to define the data block 23, the datum point of the descriptor may be a first data block of the data storage space 21, the base address of the descriptor is the start address PA_start of the data storage space 21, and then the content of the descriptor of the data block 23 can be determined according to the size ori_x of the data storage space 21 in the X axis, the size ori_y in the Y axis, the offset offset_y of the data block 23 in the Y axis direction, the offset offset_x of the data block 23 in the X axis direction, the size size_x in the X axis direction, and the size size_y in the Y axis direction.

In a possible implementation method, the following formula (1) can be used to represent the content of the descriptor:

$$\begin{cases} \text{X direction: } ori\_x, offset\_x, size\_x \\ \text{Y direction: } ori\_y, offset\_y, size\_y \\ \qquad\qquad PA\_start \end{cases} \qquad (1)$$

It should be understood that although the content of the descriptor represents a 2-dimensional space in the above-mentioned example, those skilled in the art can set the dimensions represented by the content of the descriptor according to actual situations, which is not limited in the present disclosure.

In a possible implementation method, the content of the descriptor of the tensor data may be determined according to the base address of the datum point of the descriptor in the data storage space and the position of at least two vertices at diagonal positions in N dimensions relative to the datum point.

For example, the content of the descriptor of the data block 23 in Fig. 2 can be determined according to the base address PA_base of the datum point of the descriptor in the data storage space and the position of two vertices at diagonal positions relative to the datum point. First, the datum point of the descriptor and the base address PA_base in the data storage space are determined, for example, a piece of data (for example, a piece of data at position (2, 2)) in the data storage space 21 is selected as a datum point, and a physical address of the selected data in the data storage space is used as the base address PA_base. And then, the position of at least two vertices at diagonal positions of the data block 23 relative to the datum point is determined, for example, the position of vertices at diagonal positions from the top left to the bottom right relative to the datum point is used, where the relative position of the top left vertex is (x_min, y_min), and the relative position of the bottom right vertex is (x_max, y_max); and then the content of the descriptor of the data block 23 can be determined according to the base address PA_base, the relative position (x_min, y_min) of the top left vertex, and the relative position (x_max, y_max) of the bottom right vertex.

In a possible implementation method, the following formula (2) can be used to represent the content of the descriptor:

$$\begin{cases} \text{X direction:}\ \ \text{x\_min}, \text{x\_max} \\ \text{Y direction:}\ \ \text{y\_min}, \text{y\_max} \\ \qquad\text{PA\_base} \end{cases} \tag{2}$$

It should be understood that although the top left vertex and the bottom right vertex at diagonal positions are used to determine the content of the descriptor in the above-mentioned example, those skilled in the art may set at least two specific vertices at diagonal positions according to actual needs, which is not limited in the present disclosure.

In a possible implementation method, the content of the descriptor of the tensor data can be determined according to the base address of the datum point of the descriptor in the data storage space and the mapping relationship between the data description position of the tensor data indicated by the descriptor and the data address of the tensor data indicated by the descriptor, where the mapping relationship between the data description position and the data address can be set according to actual needs. For example, when the tensor data indicated by the descriptor is 3-dimensional spatial data, the function f (x, y, z) can be used to define the mapping relationship between the data description position and the data address.

In a possible implementation method, the following formula (3) can be used to represent the content of the descriptor:

$$\begin{cases} \text{f}(\text{x},\ \text{y},\ \text{z}) \\ \ \ \text{PA\_base} \end{cases} \tag{3}$$

It should be understood that those skilled in the art can set the mapping relationship between the data description position and the data address according to actual situations, which is not limited in the present disclosure.

In a possible implementation method, when the execution unit 12 receives the content of the descriptor and the first processing instruction sent by the control unit 11, the data address of the data corresponding to the operand of the first processing instruction in the data storage space can be determined according to the content of the descriptor. The computation of the data address is completed automatically by the hardware, and when the content of the descriptor is represented in a different way, the computation method of the data address is also different. The present disclosure does not limit the specific computation method of the data address.

For example, the content of the descriptor in the operand is represented by formula (1), the offset of the tensor data indicated by the descriptor in the data storage space is offset_x and offset_y, and the size is size_x*size_y, and the start data address $PA1_{(x,y)}$ of the tensor data indicated by the descriptor in the data storage space can be determined using the following formula (4):

$$PA1_{(x,y)} = PA\_start + (offset\_y - 1) * ori\_x + offset\_x \tag{4}$$

According to the data start address $PA1_{(x,y)}$ determined based on the formula (4), and the offsets offset_x and offset_y, and the size size_x and size_y of the storage area, the storage area of the tensor data indicated by the descriptor in the data storage space can be determined.

In a possible implementation method, the execution unit 12 receives the content of the descriptor and the first processing instruction sent by the control unit 11, and when the operand further includes the data description position for the descriptor, the data address of the data corresponding to the operand in the data storage space can be determined according to the content of the descriptor and the data description position. In this way, part of the tensor data (one piece of data or a plurality pieces of data) indicated by the descriptor can be processed.

For example, the content of the descriptor in the operand is represented by formula (1), the offset of the tensor data indicated by the descriptor in the data storage space is offset_x and offset_y, the size is size_x*size_y, the data description position for the descriptor contained in the operand is $(x_q, y_q)$, then the start data address $PA2_{(x,y)}$ of the tensor data indicated by the descriptor in the data storage space can be determined using the following formula (5):

$$PA2_{(x,y)} = PA\_start + \left(offset\_y + y_q - 1\right) * ori\_x + \left(offset\_x + x_q\right) \quad (5)$$

In a possible implementation method, the first processing instruction includes a data access instruction, and the operand includes source data and target data.

The control unit 11 is configured to obtain, when the source data includes the identifier of the first descriptor and the target data includes the identifier of the second descriptor, the content of the first descriptor and the content of the second descriptor from the descriptor storage space. The control unit 11 is further configured to send the content of the first descriptor, the content of the second descriptor, and the first processing instruction to the execution unit 12.

The execution unit 12 is configured to obtain the first data address of the source data and the second data address of the target data according to the content of the received first descriptor and the content of the second descriptor, and to read data from the first data address and write the data to the second data address.

For example, in the case where both the source data and the target data include the identifier of the descriptor, the source data may be a set of off-chip data to be read, and the identifier of the first descriptor in the source data is 1; and the target data is a piece of on-chip storage space, and the identifier of the second descriptor in the target data is 2. The control unit 11 may obtain the content D1 of the first descriptor and the content D2 of the second descriptor from the descriptor storage space according to the identifier 1 of the first descriptor in the source data and the identifier 2 of the second descriptor in the target data, and the control unit 11 may further send the content D1 of the first descriptor, the content D2 of the second descriptor, and the first processing instruction to the execution unit 12. The content D1 of the first descriptor and the content D2 of the second descriptor can be represented as follows:

$$D1: \begin{cases} X \text{ direction: } ori\_x1, offset\_x1, size\_x1 \\ Y \text{ direction: } ori\_y1, offset\_y1, size\_y1 \\ \qquad PA\_start1 \end{cases}$$

$$D2: \begin{cases} X \text{ direction: } ori\_x2, offset\_x2, size\_x2 \\ Y \text{ direction: } ori\_y2, offset\_y2, size\_y2 \\ \qquad PA\_start2 \end{cases}$$

According to the content D1 of the first descriptor and the content D2 of the second descriptor, the execution unit 12 may obtain a start physical address PA3 of the source data and a start physical address PA4 of the target data, and the PA3 and the PA4 are represented as follows:

$$PA3 = PA\_start1 + \left(offset_{y1} - 1\right)) * ori\_x1 + offset\_x1$$

$$PA4 = PA\_start2 + \left(offset\_y2 - 1\right) * ori\_x2 + offset\_x2$$

According to the start physical address PA3 of the source data and the start physical address PA4 of the target data, and the content D 1 of the first descriptor and the content D2 of the second descriptor, the execution unit 12 can determine the first data address and the second data address, and the execution unit 12 may read data from the first data address and write the data to the second data address (via the IO path), so that the process of loading the tensor data indicated by D1 into the storage space indicated by D2 is completed, in other words, the off-chip data is loaded on the chip. It should be understood that the transmission of data from on-chip to off-chip is similar to the above process, and will not be repeated herein.

In a possible implementation method, the size of loaded data can be set when the data is loaded, where the size of loaded data can be set according to actual needs or the size of the storage space. For example, according to actual needs, when the data is being loaded, the first 10 data loaded in D1 can be set. The present disclosure does not limit the specific size of the loaded data.

By adopting the above-mentioned method provided by the present disclosure, the descriptor can be used to complete the data access. The content of the descriptor is stored in the descriptor storage space. In this way, there is no need to input the data address through an instruction during each data access, which can improve the data access efficiency of the processor.

In a possible implementation method, the first processing instruction includes a data access instruction, and the operand includes source data and target data.

The control unit 11 is configured to obtain content of a third descriptor from the descriptor storage space when the source data includes an identifier of the third descriptor, and to send the content of the third descriptor and the first processing instruction to the execution unit 12.

The execution unit 12 is configured to obtain a third data address of the source data according to the content of the received third descriptor, and to read data from the third data address and write the data to the data address of the target data.

For example, in the case where both the source data and the target data include the identifier of the descriptor, the source data may be a set of off-chip data to be read, and the identifier of the first descriptor in the source data is 3; and the target data is a piece of on-chip storage space. The control unit 11 may obtain the content D3 of the third descriptor from the descriptor storage space according to the identifier 3 of the third descriptor in the source data, and the control unit 11 may further send the content D3 of the third descriptor and the first processing instruction to the execution unit 12. The content D3 of the third descriptor can be represented as follows:

$$D3: \begin{cases} X \quad \text{direction}: \quad \text{ori\_x3}, \text{offset\_x3}, \text{size\_x3} \\ Y \quad \text{direction}: \quad \text{ori\_y3}, \text{offset\_y3}, \text{size\_y3} \\ \quad\quad\quad\quad\quad \text{PA\_start3} \end{cases}$$

According to the content D3 of the third descriptor, the execution unit 12 may obtain a start physical address PA5 of the source data, and the PA5 is represented as follows:

$$PA5 = PA\_start3 + \left(\text{offset}_{y3} - 1\right)) * \text{ori\_x3} + \text{offset\_x3}$$

The execution unit 12 may obtain the start physical address of the target data and the data address of the target data according to address information of the target data in the first processing instruction. For example, the address information of the target data includes a start address and a general serial number of the register of the offset. In this case, the start physical address of the target data can be obtained by accessing the general register to obtain the offset, and adding the start address and the offset; and the data address of the target data can be determined according to the size of the target data.

The execution unit 12 can determine a third data address according to the start physical address PA5 of the source data and the content D3 of the third descriptor, and then read the data from the third data address and write the data to the data address of the target data (via an IO path), thus completing the loading of the tensor data that D3 points to into the storage space of the target data, in other words, the off-chip data is loaded on the chip. It should be understood that transmitting the off-chip data on the chip is similar to the above process, and will not be repeated here.

In a possible implementation method, the first processing instruction includes a data access instruction, and the operand includes source data and target data.

The control unit 11 is configured to obtain content of a fourth descriptor from the descriptor storage space when the target data includes an identifier of the fourth descriptor, and to send the content of the fourth descriptor and the first processing instruction to the execution unit 12.

The execution unit 12 is configured to obtain a fourth data address of the target data according to the content of the received fourth descriptor, and to read data from the data address of the source data and write the data to the fourth data address.

For example, in the case where the target data includes the identifier of the descriptor, the source data may be a set of off-chip data to be read, and the target data is a piece of on-chip storage space; and the identifier of the fourth descriptor in the target data is 4. The control unit 11 may obtain the content D4 of the fourth descriptor from the descriptor storage space according to the identifier 4 of the fourth descriptor in the target data, and the control unit 11 may further send the content D4 of the fourth descriptor and the first processing instruction to the execution unit 12. The content D4 of the fourth descriptor can be represented as follows:

$$D4: \begin{cases} \text{X direction: } ori\_x4, offset\_x4, size\_x4 \\ \text{Y direction: } ori\_y4, offset\_y4, size\_y4 \\ PA\_start4 \end{cases}$$

According to the content D4 of the fourth descriptor, the execution unit 12 may obtain a start physical address PA6 of the target data, and the PA6 is represented as follows:

$$PA6 = PA\_start4 + (offset\_y4 - 1\_ * ori\_x4 + offset\_x4$$

The execution unit 12 may compute the start physical address of the source data and the data address of the source data according to address information of the source data in the first processing instruction. For example, the address information of the source data includes a start address and a general serial number of the register of the offset. In this case, the start physical address of the source data can be obtained by accessing the general register to obtain the offset, and adding the start address and the offset; and the data address of the source data can be determined according to the size of the source data.

The execution unit 12 can determine a fourth data address according to the start physical address PA6 of the target data and the content D4 of the fourth descriptor, and then read the data from the data address of the source data and write the data to the fourth data address (via an IO path), thus completing the loading of the source data into the storage space that D4 points to, in other words, the off-chip data is loaded on the chip. It should be understood that the transmitting the off-chip data on the chip is similar to the above process, and will not be repeated here.

In a possible implementation method, the first processing instruction includes an operation instruction, where the execution unit executing data processing corresponding to the first processing instruction according to the data address may include: reading data from the data address and executing an operation corresponding to the operation instruction.

For example, in the case where the first processing instruction is an operation instruction and the operand of the operation instruction includes the identifier of the descriptor, the control unit 11 may obtain the content of the descriptor from the descriptor storage space according to the identifier of the descriptor, and send the content of the descriptor and the operation instruction to the execution unit 12. The execution unit 12 determines the data address of the data to be computed according to the content of the received descriptor, reads the data to be computed from the data address and executes the operation corresponding to the operation instruction. For example, if the operation instruction is an ADD instruction, when the operand includes the identifier of the descriptor, the control unit 11 may obtain the content of the descriptor according to the identifier of the descriptor, and send the content of the descriptor and the ADD instruction to the execution unit 12; and the execution unit 12 may determine the data address of the data to be computed according to the content of the descriptor, and execute an ADD operation. When the operand is off-chip data, the execution unit 12 may load the data on the chip through an IO path according to the data address, then read the data from the on-chip data address of the operand, and execute the ADD operation.

In this way, the descriptor can be used to complete the data transmission, which may improve the data access efficiency of the processor.

According to the data processing apparatus provided in the embodiments of the present disclosure, the descriptor capable of describing the shape of the data is introduced, so that the data address can be determined via the descriptor during the execution of the first processing instruction, and the instruction generation method is simplified from the hardware side, thereby reducing the complexity of data access and improving the efficiency of the processor to access data.

It should be noted that although the data processing apparatus is described above by taking the above-mentioned embodiment as an example, those skilled in the art can understand that the present disclosure does not limit the specific structure of the data processing apparatus. In fact, users can set various modules flexibly according to personal preferences and/or actual application scenarios, as long as the modules conform to the technical solution of the present disclosure.

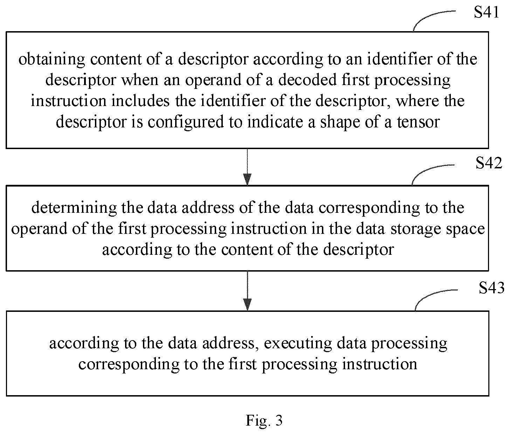

Fig. 3 shows a flowchart of a data processing method according to an embodiment of the present disclosure. As shown in Fig. 3, the data processing method is applied to a processor, and the data processing method includes:

a step S41: obtaining content of a descriptor according to an identifier of the descriptor when an operand of a decoded first processing instruction includes the identifier of the descriptor, where the descriptor is configured to indicate a shape of a tensor;
a step S42: determining the data address of the data corresponding to the operand of the first processing instruction in the data storage space according to the content of the descriptor; and

a step S43: according to the data address, executing data processing corresponding to the first processing instruction.

In a possible implementation method, the step S42 includes:
when the operand further includes a data description position for the descriptor, determining the data address of the data corresponding to the operand in the data storage space according to the content of the descriptor and the data description position.

In a possible implementation method, the descriptor is used to indicate the shape of N-dimensional tensor data, where N is a positive integer. The content of the descriptor includes at least one shape parameter indicating the shape of the tensor data.

In a possible implementation method, the descriptor is also used to indicate the address of N-dimensional tensor data. The content of the descriptor further includes at least one address parameter indicating the address of the tensor data.

In a possible implementation method, the address parameter of the tensor data includes the base address of the datum point of the descriptor in the data storage space of the tensor data. The shape parameter of the tensor data includes at least one of the followings:
a size of the data storage space in at least one of N dimensions, a size of the storage area of the tensor data in at least one of N dimensions, an offset of the storage area in at least one of N dimensions, a position of at least two vertices at diagonal positions in N dimensions relative to the datum point, and a mapping relationship between a data description position of the tensor data indicated by the descriptor and the data address of the tensor data indicated by the descriptor.

In a possible implementation method, the base address may include a start address of the data storage space.

In a possible implementation method, the first processing instruction includes a data access instruction, and the operand includes source data and target data. When the operand of the decoded first processing instruction includes the identifier of the descriptor, the step S41 may include: when the source data includes an identifier of the first descriptor and the target data includes an identifier of the second descriptor, obtaining content of the first descriptor and content of the second descriptor from the descriptor storage space.

The step S42 may include: obtaining the first data address of the source data and the second data address of the target data according to the content of the first descriptor and the content of the second descriptor.

The step S43 may include: reading data from the first data address and writing the data to the second data address.

In a possible implementation method, the first processing instruction includes a data access instruction, and the operand includes source data and target data. When the operand of the decoded first processing instruction includes the identifier of the descriptor, the step S41 may include: when the source data includes an identifier of the third descriptor, obtaining content of the third descriptor from the descriptor storage space.

The step S42 may include: obtaining the third data address of the source data according to the content of the third descriptor.

The step S43 may include: reading data from the third data address and writing the data to the data address of the target data.

In a possible implementation method, the first processing instruction includes a data access instruction, and the operand includes source data and target data. When the operand of the decoded first processing instruction includes the identifier of the descriptor, the step S41 may include: when the target data includes an identifier of the fourth descriptor, obtaining content of the fourth descriptor from the descriptor storage space.

The step S42 may include: obtaining the fourth data address of the target data according to the content of the fourth descriptor.

The step S43 may include: reading data from the data address of the source data and writing the data to the fourth data address.

In a possible implementation method, the first processing instruction includes an operation instruction.

The step S43 may further include: reading data from the data address and executing an operation corresponding to the operation instruction.

In a possible implementation method, the data processing method further includes:
decoding the received first processing instruction to obtain the decoded first processing instruction, where the decoded first processing instruction includes an operation code and one or more operands, where the operation code is used to indicate a processing type corresponding to the first processing instruction.

In a possible implementation method, the descriptor storage space is a storage space in the internal memory of the processor, and the data storage space is a storage space in the internal memory or the external memory of the processor.

In a possible implementation method, the present disclosure further provides an artificial intelligence chip including the data processing apparatus.

In a possible implementation method, the present disclosure provides a board card including a storage device, an interface apparatus, a control device, and the above-mentioned artificial intelligence chip. The artificial intelligence chip is connected to the storage device, the control device, and the interface apparatus, respectively; the storage device is configured to store data; the interface apparatus is configured to implement data transmission between the artificial intelligence chip and the external equipment; and the control device is configured to monitor the state of the artificial intelligence chip.

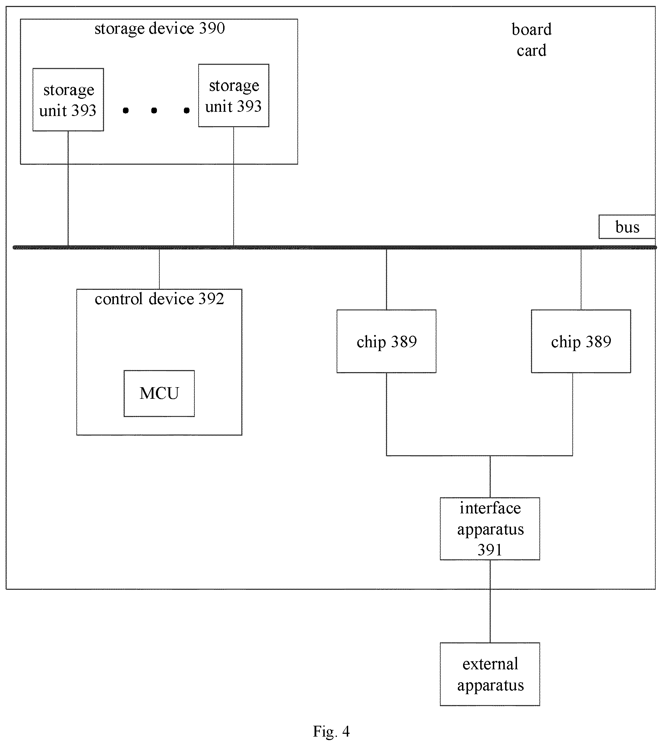

Fig. 4 shows a block diagram of a board card according to an embodiment of the present disclosure. As shown in Fig. 4, in addition to the above-mentioned chip 389, the board card may further include other supporting components, including but not limited to: a storage device 390, an interface apparatus 391, and a control device 392.

The storage device 390 is connected to the artificial intelligence chip through a bus, and is configured to store data. The storage device may include a plurality of groups of storage units 393, where each group of the storage units is connected with the artificial intelligence chip by a bus. It can be understood that each group of the storage units may be DDR SDRAM (Double Data Rate SDRAM (synchronized dynamic random access memory)).

DDR can double a speed of SDRAM without increasing a clock rate. DDR allows reading data on rising and falling edges of the clock pulse. DDR is twice as fast as standard SDRAM. In an embodiment, the storage device may include 4 groups of the storage unit, where each group of the storage units may include a plurality of DDR4 particles (chips). In an embodiment, the inner part of the artificial intelligence chip may include four 72-bit DDR4 controllers, in which 64 bits of the four 72-bit DDR4 controllers are used for data transmission, and 8 bits of the four 72-bit DDR4 controllers are used for ECC check. It can be understood that when DDR4-3200 particles are used in each group of the storage units, the theoretical bandwidth of data transmission can reach 25600MB/s.

In an embodiment, each group of the storage units may include a plurality of DDR SDRAMs arranged in parallel. DDR can transmit data twice in one clock cycle. A controller for controlling DDR is provided in the chip, where the controller is used for controlling the data transmission and data storage of each storage unit.

The interface apparatus is electrically connected to the artificial intelligence chip, where the interface apparatus is configured to implement data transmission between the artificial intelligence chip and an external apparatus (such as a server or a computer). For example, in an embodiment, the interface apparatus may be a standard PCIE interface, and data to be processed is transmitted from the server to the chip through the standard PCIE interface to realize data transmission. Preferably, when a PCIE 3.0 X 16 interface is used for data transmission, the theoretical bandwidth can reach 16000MB/s. In another embodiment, the interface apparatus may further include other interfaces. The present disclosure does not limit the specific types of the interfaces, as long as the interface units can implement data transmission. In addition, the computation result of the artificial intelligence chip is still transmitted back to an external apparatus (such as a server) by the interface apparatus.

The control device is electrically connected to the artificial intelligence chip, where the control device is configured to monitor the state of the artificial intelligence chip. Specifically, the artificial intelligence chip may be electrically connected to the control device through an SPI interface, where the control device may include an MCU (Micro Controller Unit). The artificial intelligence chip may include a plurality of processing chips, a plurality of processing cores, or a plurality of processing circuits, and may drive a plurality of loads. Therefore, the artificial intelligence chip can be in different working state such as multi-load state and light-load state. The regulation of the working states of a plurality of processing chips, a plurality of processing cores and or a plurality of processing circuits in the neural network chip can be implemented by the control device.

In a possible implementation method, the present disclosure provides an electronic device including the artificial intelligence chip. The electronic device includes a data processing apparatus, a robot, a computer, a printer, a scanner, a tablet computer, an intelligent terminal, a mobile phone, an automobile data recorder, a navigator, a sensor, a webcam, a cloud server, a camera, a video camera, a projector, a watch, an earphone, a mobile storage, a wearable apparatus, a transportation means, a household electrical appliance, and/or a medical apparatus.

The transportation means may include an airplane, a ship, and/or a vehicle. The household electrical appliance may include a television, an air conditioner, a microwave oven, a refrigerator, an electric rice cooker, a humidifier, a washing machine, an electric lamp, a gas cooker, and a range hood. The medical apparatus may include a nuclear magnetic resonance spectrometer, a B-ultrasonic scanner, and/or an electrocardiograph.

The embodiments of the present disclosure have been described above, and the above description is exemplary, not exhaustive, and is not limited to the disclosed embodiments. Without departing from the scope of the described embodiments, many modifications and changes are obvious to those ordinary skilled in the art. The choice of terms used herein is intended to best explain the principles, practical applications, or improvements to technologies in the market of the embodiments, or to enable other ordinary skilled in the art to understand the embodiments disclosed herein.

**Claims**

1.  A data processing method, implemented by a processor, comprising:

obtaining (S11a)
content of a descriptor according to an identifier of the descriptor when an operand of a decoded first processing instruction includes the identifier of the descriptor, where the descriptor is configured to indicate a shape of a tensor and to indicate data address of the tensor data, and
executing (S12a)
the first processing instruction according to the content of the descriptor, including

> determining the data address of the tensor data corresponding to the operand of the first processing instruction in a data storage space, according to the content of the descriptor, and
> according to the data address, executing data processing corresponding to the first processing instruction.

2. The data processing method of claim 1, wherein the determining the data address of the tensor data corresponding to the operand of the first processing instruction in the data storage space according to the content of the descriptor includes:
when the operand further includes a data description position for the descriptor, determining the data address of the data corresponding to the operand in the data storage space according to the content of the descriptor and the data description position.

3. The data processing method of any of claim 1 to 2, wherein the descriptor is used to indicate a shape of N-dimensional tensor data, where N is a positive integer, where
the content of the descriptor includes at least one shape parameter indicating the shape of the tensor data.

4. The data processing method of claim 3, wherein the content of the descriptor further includes at least one address parameter indicating the address of the tensor data.

5. The data processing method of any one of claims 1 to 4, wherein the first processing instruction includes a data access instruction, and the operand includes source data and target data, wherein

> the obtaining content of a descriptor according to an identifier of the descriptor when an operand of a decoded first processing instruction includes the identifier of the descriptor includes: obtaining, when the source data includes an identifier of a first descriptor and the target data includes an identifier of a second descriptor, content of the first descriptor and content of the second descriptor from the descriptor storage space, respectively,
> the determining a data address of data corresponding to the operand of the first processing instruction in the data storage space according to the content of the descriptor includes: obtaining a first data address of the source data and a second data address of the target data according to the content of the first descriptor and the content of the second descriptor, respectively, and
> the executing data processing corresponding to the first processing instruction according to the data address includes: reading data from the first data address and writing the data to the second data address.

6. The data processing method of any one of claims 1 to 4, wherein the first processing instruction includes the data access instruction, and the operand includes the source data and the target data, wherein

> the obtaining content of a descriptor according to an identifier of the descriptor when an operand of a decoded first processing instruction includes the identifier of the descriptor includes: obtaining, when the source data includes an identifier of a third descriptor, content of the third descriptor from a descriptor storage space,
> the determining a data address of data corresponding to the operand of the first processing instruction in the data storage space according to the content of the descriptor includes: obtaining a third data address of the source data according to the content of the third descriptor, and
> the executing data processing corresponding to the first processing instruction according to the data address includes: reading data from the third data address and writing the data to the data address of the target data.

7. The data processing method of any one of claims 1 to 4, wherein the first processing instruction includes the data access instruction, and the operand includes the source data and the target data, wherein

> the obtaining content of a descriptor according to an identifier of the descriptor when an operand of a decoded first processing instruction includes the identifier of the descriptor includes: obtaining, when the target data includes an identifier of a fourth descriptor, content of the fourth descriptor from the descriptor storage space,
> the determining a data address of data corresponding to the operand of the first processing instruction in the data storage space according to the content of the descriptor includes: obtaining a fourth data address of the target data according to the content of the fourth descriptor, and

the executing data processing corresponding to the first processing instruction according to the data address includes: reading data from the data address of the source data and writing the data to the fourth data address.

8. The data processing method of any of claims 1 to 7, wherein the first processing instruction includes an operation instruction, where the executing data processing corresponding to the first processing instruction according to the data address includes:

reading data from the data address and executing an operation corresponding to the operation instruction.

9. The data processing method of any one of claims 1 to 8, further comprising:

decoding the received first processing instruction to obtain a decoded first processing instruction, where the decoded first processing instruction includes an operation code and one or more operands, and the operation code is used to indicate a processing type corresponding to the first processing instruction.

10. The data processing method of any of claims 1 to 9, wherein the descriptor storage space is a storage space in an internal memory of a processor, and the data storage space is a storage space in an internal memory or an external memory of a processor.

11. A data processing apparatus, comprising means for carrying out the method of any of claims 1 to 10.

12. A neural network chip comprising the data processing apparatus of claim 11.

13. An electronic device comprising the neural network chip of claim 12.

14. A board card comprising a storage device, an interface apparatus, a control device, and the neural network chip of claim 12, wherein

the neural network chip is connected to the storage device, the control device, and the interface apparatus, respectively,

the storage device is configured to store data,

the interface apparatus is configured to implement data transmission between the neural network chip and an external equipment, and

the control device is configured to monitor a state of the neural network chip.

**Patentansprüche**

1. Datenverarbeitungsverfahren, implementiert durch einen Prozessor, umfassend:

Erhalten (S 11a) von Inhalt eines Deskriptors gemäß einer Kennung des Deskriptors, wenn ein Operand einer decodierten ersten Verarbeitungsanweisung die Kennung des Deskriptors beinhaltet, wobei der Deskriptor konfiguriert ist, um eine Form eines Tensors anzugeben und um Datenadresse der Tensordaten anzugeben, und

Ausführen (S12a) der ersten Verarbeitungsanweisung gemäß dem Inhalt des Deskriptors, beinhaltend:

Bestimmen der Datenadresse der Tensordaten entsprechend dem Operanden der ersten Verarbeitungsanweisung in einem Datenspeicherplatz gemäß dem Inhalt des Deskriptors, und

gemäß der Datenadresse, Ausführen von Datenverarbeitung entsprechend der ersten Verarbeitungsanweisung.

2. Datenverarbeitungsverfahren nach Anspruch 1, wobei das Bestimmen der Datenadresse der Tensordaten entsprechend dem Operanden der ersten Verarbeitungsanweisung in dem Datenspeicherplatz gemäß dem Inhalt des Deskriptors Folgendes beinhaltet:

wenn der Operand ferner eine Datenbeschreibungsposition für den Deskriptor beinhaltet, Bestimmen der Datenadresse der Daten entsprechend dem Operanden in dem Datenspeicherplatz gemäß dem Inhalt des Deskriptors und der Datenbeschreibungsposition.

**3.** Datenverarbeitungsverfahren nach einem von Anspruch 1 bis 2, wobei der Deskriptor verwendet wird, um eine Form von N-dimensionalen Tensordaten anzugeben, wobei N eine positive ganze Zahl ist, wobei der Inhalt des Deskriptors zumindest einen Formparameter beinhaltet, der die Form der Tensordaten angibt.

**4.** Datenverarbeitungsverfahren nach Anspruch 3, wobei der Inhalt des Deskriptors ferner zumindest einen Adressparameter beinhaltet, der die Adresse der Tensordaten angibt.

**5.** Datenverarbeitungsverfahren nach einem der Ansprüche 1 bis 4, wobei die erste Verarbeitungsanweisung eine Datenzugriffsanweisung beinhaltet und der Operand Quelldaten und Zieldaten beinhaltet, wobei

das Erhalten von Inhalt eines Deskriptors gemäß einer Kennung des Deskriptors, wenn ein Operand einer decodierten ersten Verarbeitungsanweisung die Kennung des Deskriptors beinhaltet, Folgendes beinhaltet: Erhalten, wenn die Quelldaten eine Kennung eines ersten Deskriptors beinhalten und die Zieldaten eine Kennung eines zweiten Deskriptors beinhalten, jeweils von Inhalt des ersten Deskriptors und Inhalt des zweiten Deskriptors aus dem Deskriptorspeicherplatz,
das Bestimmen einer Datenadresse von Daten entsprechend dem Operanden der ersten Verarbeitungsanweisung in dem Datenspeicherplatz gemäß dem Inhalt des Deskriptors Folgendes beinhaltet: Erhalten einer ersten Datenadresse der Quelldaten und einer zweiten Datenadresse der Zieldaten jeweils gemäß dem Inhalt des ersten Deskriptors und dem Inhalt des zweiten Deskriptors, und
das Ausführen von Datenverarbeitung entsprechend der ersten Verarbeitungsanweisung gemäß der Datenadresse Folgendes beinhaltet: Lesen von Daten aus der ersten Datenadresse und Schreiben der Daten an die zweite Datenadresse.

**6.** Datenverarbeitungsverfahren nach einem der Ansprüche 1 bis 4, wobei die erste Verarbeitungsanweisung die Datenzugriffsanweisung beinhaltet und der Operand die Quelldaten und die Zieldaten beinhaltet, wobei

das Erhalten von Inhalt eines Deskriptors gemäß einer Kennung des Deskriptors, wenn ein Operand einer decodierten ersten Verarbeitungsanweisung die Kennung des Deskriptors beinhaltet, Folgendes beinhaltet: Erhalten, wenn die Quelldaten eine Kennung eines dritten Deskriptors beinhalten, von Inhalt des dritten Deskriptors von einem Deskriptorspeicherplatz,
das Bestimmen einer Datenadresse von Daten entsprechend dem Operanden der ersten Verarbeitungsanweisung in dem Datenspeicherplatz gemäß dem Inhalt des Deskriptors Folgendes beinhaltet: Erhalten einer dritten Datenadresse der Quelldaten gemäß dem Inhalt des dritten Deskriptors, und
das Ausführen von Datenverarbeitung entsprechend der ersten Verarbeitungsanweisung gemäß der Datenadresse Folgendes beinhaltet: Lesen von Daten aus der dritten Datenadresse und Schreiben der Daten an die Datenadresse der Zieldaten.

**7.** Datenverarbeitungsverfahren nach einem der Ansprüche 1 bis 4, wobei die erste Verarbeitungsanweisung die Datenzugriffsanweisung beinhaltet und der Operand die Quelldaten und die Zieldaten beinhaltet, wobei

das Erhalten von Inhalt eines Deskriptors gemäß einer Kennung des Deskriptors, wenn ein Operand einer decodierten ersten Verarbeitungsanweisung die Kennung des Deskriptors beinhaltet, Folgendes beinhaltet: Erhalten, wenn die Zieldaten eine Kennung eines vierten Deskriptors beinhalten, von Inhalt des vierten Deskriptors von dem Deskriptorspeicherplatz,
das Bestimmen einer Datenadresse von Daten entsprechend dem Operanden der ersten Verarbeitungsanweisung in dem Datenspeicherplatz gemäß dem Inhalt des Deskriptors Folgendes beinhaltet: Erhalten einer vierten Datenadresse der Zieldaten gemäß dem Inhalt des vierten Deskriptors, und
das Ausführen von Datenverarbeitung entsprechend der ersten Verarbeitungsanweisung gemäß der Datenadresse Folgendes beinhaltet: Lesen von Daten aus der Datenadresse der Quelldaten und Schreiben der Daten an die vierte Datenadresse.

**8.** Datenverarbeitungsverfahren nach einem der Ansprüche 1 bis 7, wobei die erste Verarbeitungsanweisung eine Operationsanweisung beinhaltet, wobei das Ausführen von Datenverarbeitung entsprechend der ersten Verarbeitungsanweisung gemäß der Datenadresse Folgendes beinhaltet:
Lesen von Daten aus der Datenadresse und Ausführen einer Operation entsprechend der Operationsanweisung.

**9.** Datenverarbeitungsverfahren nach einem der Ansprüche 1 bis 8, ferner umfassend:

Decodieren der empfangenen ersten Verarbeitungsanweisung, um eine decodierte erste Verarbeitungsanweisung zu erhalten, wobei
die decodierte erste Verarbeitungsanweisung einen Operationscode und einen oder mehrere Operanden beinhaltet und der Operationscode verwendet wird, um einen Verarbeitungstyp entsprechend der ersten Verarbeitungsanweisung anzugeben.

10. Datenverarbeitungsverfahren nach einem der Ansprüche 1 bis 9, wobei der Deskriptorspeicherplatz ein Speicherplatz in einem internen Speicher eines Prozessors ist und der Datenspeicherplatz ein Speicherplatz in einem internen Speicher oder einem externen Speicher eines Prozessors ist.

11. Datenverarbeitungsvorrichtung, umfassend Mittel zum Durchführen des Verfahrens nach einem der Ansprüche 1 bis 10.

12. Neuronaler Netzwerkchip, umfassend die Datenverarbeitungsvorrichtung nach Anspruch 11.

13. Elektronisches Gerät, umfassend den neuronalen Netzwerkchip nach Anspruch 12.

14. Steckkarte, umfassend ein Speichergerät, eine Schnittstellenvorrichtung, ein Steuergerät und den neuronalen Netzwerkchip nach Anspruch 12, wobei

der neuronale Netzwerkchip jeweils mit dem Speichergerät, dem Steuergerät und der Schnittstellenvorrichtung verbunden ist,
das Speichergerät konfiguriert ist, um Daten zu speichern,
die Schnittstellenvorrichtung konfiguriert ist, um Datenübertragung zwischen dem neuronalen Netzwerkchip und einer externen Ausrüstung zu implementieren, und
das Steuergerät konfiguriert ist, um einen Zustand des neuronalen Netzwerkchips zu überwachen.


**Revendications**

1. Procédé de traitement de données, mis en oeuvre par un processeur, comprenant :

l'obtention (S11a) d'un contenu d'un descripteur selon un identifiant du descripteur lorsqu'un opérande d'une première instruction de traitement décodée comprend l'identifiant du descripteur, où le descripteur est configuré pour indiquer une forme d'un tenseur et pour indiquer l'adresse de données des données tensorielles, et
l'exécution (S12a) de la première instruction de traitement selon le contenu du descripteur, comprenant :

la détermination de l'adresse de données des données tensorielles correspondant à l'opérande de la première instruction de traitement dans un espace de stockage de données, selon le contenu du descripteur, et
selon l'adresse de données, l'exécution d'un traitement de données correspondant à la première instruction de traitement.

2. Procédé de traitement de données de la revendication 1, ladite détermination de l'adresse de données des données tensorielles correspondant à l'opérande de la première instruction de traitement dans l'espace de stockage de données selon le contenu du descripteur comprenant :
lorsque l'opérande comprend en outre une position de description de données pour le descripteur, la détermination de l'adresse de données des données correspondant à l'opérande dans l'espace de stockage de données selon le contenu du descripteur et la position de description de données.

3. Procédé de traitement de données de l'une des revendications 1 à 2, ledit descripteur étant utilisé pour indiquer une forme de données tensorielles à N dimensions, N étant un entier positif, où
le contenu du descripteur comprend au moins un paramètre de forme indiquant la forme des données tensorielles.

4. Procédé de traitement de données de la revendication 3, ledit contenu du descripteur comprenant en outre au moins un paramètre d'adresse indiquant l'adresse des données tensorielles.

5. Procédé de traitement de données de l'une quelconque des revendications 1 à 4, ladite première instruction de traitement comprenant une instruction d'accès aux données, et ledit opérande comprenant des données source et des données cible,

ladite obtention d'un contenu d'un descripteur selon un identifiant du descripteur lorsqu'un opérande d'une première instruction de traitement décodée comprend l'identifiant du descripteur comprenant : l'obtention, lorsque les données source comprennent un identifiant d'un premier descripteur et les données cibles comprennent un identifiant d'un deuxième descripteur, d'un contenu du premier descripteur et d'un contenu du deuxième descripteur à partir de l'espace de stockage de descripteurs, respectivement,
ladite détermination d'une adresse de données de données correspondant à l'opérande de la première instruction de traitement dans l'espace de stockage de données selon le contenu du descripteur comprenant : l'obtention d'une première adresse de données des données source et d'une seconde adresse de données des données cible selon le contenu du premier descripteur et le contenu du deuxième descripteur, respectivement, et
ladite exécution du traitement de données correspondant à la première instruction de traitement selon l'adresse de données comprenant : la lecture de données à partir de la première adresse de données et l'écriture des données à la deuxième adresse de données.

6. Procédé de traitement de données de l'une quelconque des revendications 1 à 4, ladite première instruction de traitement comprenant l'instruction d'accès aux données, et ledit opérande comprenant les données source et les données cible,

ladite obtention de contenu d'un descripteur selon un identifiant du descripteur lorsqu'un opérande d'une première instruction de traitement décodée comprend l'identifiant du descripteur comprenant : l'obtention, lorsque les données source comprennent un identifiant d'un troisième descripteur, d'un contenu du troisième descripteur à partir d'un espace de stockage de descripteurs,
ladite détermination d'une adresse de données de données correspondant à l'opérande de la première instruction de traitement dans l'espace de stockage de données selon le contenu du descripteur comprenant : l'obtention d'une troisième adresse de données des données source selon le contenu du troisième descripteur, et
ladite exécution de traitement de données correspondant à la première instruction de traitement selon l'adresse de données comprenant : la lecture de données à partir de la troisième adresse de données et l'écriture des données à l'adresse de données des données cibles.

7. Procédé de traitement de données de l'une quelconque des revendications 1 à 4, ladite première instruction de traitement comprenant l'instruction d'accès aux données, et ledit opérande comprenant les données source et les données cible,

ladite obtention de contenu d'un descripteur selon un identifiant du descripteur lorsqu'un opérande d'une première instruction de traitement décodée comprend l'identifiant du descripteur comprenant : l'obtention, lorsque les données cible comprennent un identifiant d'un quatrième descripteur, d'un contenu du quatrième descripteur à partir de l'espace de stockage de descripteurs,
ladite détermination d'une adresse de données de données correspondant à l'opérande de la première instruction de traitement dans l'espace de stockage de données selon le contenu du descripteur comprenant : l'obtention d'une quatrième adresse de données des données cibles selon le contenu du quatrième descripteur, et
ladite exécution du traitement de données correspondant à la première instruction de traitement selon l'adresse de données comprenant : la lecture de données à partir de l'adresse de données des données source et l'écriture des données à la quatrième adresse de données.

8. Procédé de traitement de données de l'une quelconque des revendications 1 à 7, ladite première instruction de traitement
comprenant une instruction d'opération, où l'exécution du traitement de données correspondant à la première instruction de traitement selon l'adresse de données comprend :
la lecture de données à partir de l'adresse de données et l'exécution d'une opération correspondant à l'instruction d'opération.

9. Procédé de traitement de données selon l'une quelconque des revendications 1 à 8, comprenant en outre :

le décodage de la première instruction de traitement reçue pour obtenir une première instruction de traitement décodée, où
la première instruction de traitement décodée comprend un code d'opération et un ou plusieurs opérandes, et le code d'opération est utilisé pour indiquer un type de traitement correspondant à la première instruction de traitement.

10. Procédé de traitement de données selon l'une quelconque des revendications 1 à 9, ladite espace de stockage de descripteur étant un espace de stockage dans une mémoire interne d'un processeur, et ledit espace de stockage de données étant un espace de stockage dans une mémoire interne ou une mémoire externe d'un processeur.

11. Appareil de traitement de données, comprenant un moyen pour effectuer le procédé selon l'une quelconque des revendications 1 à 10.

12. Puce de réseau neuronal comprenant l'appareil de traitement de données de la revendication 11.

13. Dispositif électronique comprenant la puce de réseau neuronal de la revendication 12.

14. Carte de plaquette, comprenant un dispositif de stockage, un appareil d'interface, un dispositif de commande et la puce de réseau neuronal de la revendication 12,

ladite puce de réseau neuronal étant connectée au dispositif de stockage, au dispositif de commande et à l'appareil d'interface, respectivement,
ledit dispositif de stockage étant configuré pour stocker des données,
ledit appareil d'interface étant configuré pour mettre en oeuvre une transmission de données entre la puce de réseau neuronal et un équipement externe, et
ledit dispositif de commande étant configuré pour surveiller un état de la puce de réseau neuronal.

Fig. 1

Fig. 2

S41

obtaining content of a descriptor according to an identifier of the descriptor when an operand of a decoded first processing instruction includes the identifier of the descriptor, where the descriptor is configured to indicate a shape of a tensor

S42

determining the data address of the data corresponding to the operand of the first processing instruction in the data storage space according to the content of the descriptor

S43

according to the data address, executing data processing corresponding to the first processing instruction

Fig. 3

Fig. 4

20

**EP 3 825 842 B1**

## REFERENCES CITED IN THE DESCRIPTION

### Patent documents cited in the description

- US 20180314946 A

- US 2016246599 A